# EUROPEAN PATENT SPECIFICATION

(11) **EP 2 983 479 B1**
(45) Date of publication and mention of the grant of the patent: **31.10.2018**
(21) Application number: 14711722.0
(22) Date of filing: 14.03.2014
(51) Int. Cl.: A21D 2/36, A23D 7/005, A23L 3/3463, A21D 2/16, A21D 2/18, A21D 13/06, A21D 13/066, A21D 13/068, A23P 10/20, A23P 10/22, A23P 10/40, A23L 29/212, A23L 33/20, A23L 17/10, A21D 13/40, A23L 3/46, A23L 17/60, A23L 35/00

(54) **MICROALGAL FLOUR GRANULES AND PROCESS FOR PREPARATION THEREOF**
MIKROALGENMEHLGRANULAT UND HERSTELLUNGSVERFAHREN DAFÜR
GRANULES À BASE DE FARINE DE MICRO-ALGUES ET LEURS PROCÉDÉS DE PRÉPARATION

(30) Priority: 15.03.2013 EP 13159385
(43) Date of publication of application: 17.02.2016
(73) Proprietor: Corbion Biotech, Inc., South San Francisco, CA 94080 (US)
(72) Inventor: PASSE, Damien, F-59500 Douai (FR)
(74) Representative: Cabinet Becker et Associés
(86) International application number: PCT/EP2014/055057
(87) International publication number: WO 2014/140242

(56) References cited:
- EP-A2- 0 622 027
- WO-A1-2010/100368
- WO-A1-2010/100369
- WO-A1-2010/120923
- WO-A1-2013/059023
- US-A1- 2011 256 282
- DATABASE WPI Week 200549 Thomson Scientific, London, GB; AN 2005-480030 XP002694315, & CN 1 596 694 A (QINGDAO JUDAYANG SEAWEED IND CO LTD) 23 March 2005 (2005-03-23)
- Elaine Watson: "Solazyme Breaking News on Food & Beverage Development -North America SPECIAL EDITION: PROTEIN-RICH FOODS... THE NEXT GENERATION Could algae be the next big thing in the protein market? Part one: Solazyme Roquette Nutritionals", , 23 January 2013 (2013-01-23), XP055110159, Retrieved from the Internet: URL:http://www.foodnavigator-usa.com/conte nt/view/print/733996 [retrieved on 2014-03-26]
- Anonymous: "Solazyme Roquette Nutritionals Golden Chlorella Omega to be key ingredient in Natural Vitality Release of new 30oz Bottle for Energy28 Golden", , 10 March 2011 (2011-03-10), XP055110155, Retrieved from the Internet: URL:http://investors.solazyme.com/common/d ownload/download.cfm?companyid=ABEA-673WYL &fileid=480217&filekey=31f6d18b-7dff-4396- 8649-33dd2e6d4433&filename=588870.pdf [retrieved on 2014-03-26]

## Description

### Technical Field

The present invention relates to microalgal flour granules, and specifically, lipid-rich microalgal flour granules.

### Background

There are at least several algal species which can be used in food, most being "macroalgae" such as kelp, sea lettuce (*Ulva lactuca*) and red algae for food, of the *Porphyra* (cultivated in Japan) or dulse (red alga *Palmaria palmata*) type.

However, besides these macroalgae, there are also sources of algae represented by the "microalgae", i.e. photosynthetic or nonphotosynthetic single-cell microscopic algae of marine or nonmarine origin, cultivated for their applications in biofuel or food.

For example, spirulina (*Arthrospira platensis*) is cultivated in open lagoons (by phototrophy) for use as a food supplement or incorporated in small amounts into confectionery or drinks (generally less than 0.5% w/w). Other marine microalgae which may be added to food products as intact microspheres are disclosed in EP 0 622 027.

In addition, microalgae have been used in food products for their content in proteins (WO 2010/100368 ; WO 2010/100369), such as the product sold by Solazyme Roquette Nutritionals as Amalgine® HP.

Other lipid-rich microalgae, including certain species of *Chlorella,* are also popular in Asian countries as food supplements (mention is made of microalgae of the *Crypthecodinium* or *Schizochytrium* genus). Such lipid-rich macroalgae have also been marketed by Solazyme Roquette Nutritionals as Golden Chlorella® Omega for use in energy drinks. The production and use of microalgal flour is disclosed in WO 2010/120923, WO 2010/045368, US 2011/256282, WO 2010/120923 and WO 2013/059023.

The oil fraction of the microalgal flour, which can be composed essentially of monounsaturated oils, may provide nutritional and health advantages compared with the saturated, hydrogenated and polyunsaturated oils often found in conventional food products.

In endeavouring to make a microalgal flour from microalgal biomass significant difficulties remain. For example, when using microalgae with a high oil content (e.g., 10, 25, 50 or even 75% or more by dry cell weight, an undesirably sticky dry powder may be obtained. This may require the addition of flow agents (including silica-derived products).

Problems of water-dispersibility of the dried biomass flours, which then have poorer wettability properties, can also be encountered.

There is therefore still an unsatisfied need for novel forms of lipid-rich microalgal biomass flour in order to make it possible to easily incorporate them, on a large scale, into food products which must remain delicious and nutritive.

### Summary of the Invention

The present invention relates to microalgal flour granules, characterized in that they have the following characteristics:
- a monomodal particle size distribution, measured on a particle size analyser, of from 2 to 400 µm, centred on a particle mode diameter (D mode) between 5 and 15 µm,
- flow grades, determined according to a test A,
   ○ 0.5 to 60% by weight for the oversize at 2000 µm,
   ○ 0.5 to 60% by weight for the oversize at 1400 µm,
   ○ 0.5 to 95% by weight for the oversize at 800 µm,
- a degree of wettability, expressed according to a test B, by the height of the product settled in a beaker, at a value of 0 to 4.0 cm, preferably 0 to 2.0 cm, more preferably 0 to 0.5 cm,
   and in that the percentage of lipid in the granules is at least 25% by dry weight
   and the percentage of lysed cells in the granules is 25% to 95%.

Preferably, the microalgal flour granules contain at least 80 % in weight of microalgal biomass. Preferably, the microalgae are of the *Chlorella* genus.

Preferably, the granules have a monomodal particle size distribution, measured on a particle size analyser, of from 2 to 200 µm or 2 to 100 µm, centred on a particle mode diameter (D mode) between 5 and 15 µm.

Preferably, the granules have flow grades, determined according to a test A:
○ 0.5 to 40 % by weight for the oversize at 2000 µm, preferably 0.5 to 20 % by weight,
○ 20 to 60 % by weight for the oversize at 1400 µm, preferably 40 to 60 % by weight, and
o 10 to 95% by weight for the oversize at 800 µm, preferably 10 to 40 % by weight.

Optionally, the granules may have an aerated bulk density of 0.30 to 0.50 g/ml, preferably of 0.35 to 0.45 g/ml, and in particular of 0.35 to 0.42 g/ml.

Optionally, the granules may have a specific surface area according to the BET method of 0.10 to 0.7 m²/g, preferably of 0.3 to 0.6 m²/g, and in particular 0.4 to 0.6 m²/g.

The percentage of intact cells in the granules is 5% to 75%.

The present also relates to a process for preparing the granules according to the present invention, characterized in that it comprises the following steps:
1) preparing a microalgal flour emulsion in water at a dry matter content of 15 to 40% by dry weight,
2) introducing this emulsion into a high-pressure homogeniser,
3) spraying it in a vertical spray-drier equipped with a moving belt at its base, and with a high-pressure nozzle in its upper part, while at the same time regulating:
   a) the pressure applied at the spray nozzles at values of more than 100 bar, preferably at 100 to 200 bar, more preferably at 160 to 170 bar,
   b) the inlet temperature of 200° to 250°C, preferably 180° to 200°C, and
   c) the outlet temperature in this spray-drying zone is 60° to 120°C, preferably at 60° to 110°C, more preferably 60° to 80°C,
4) regulating the inlet temperatures of the post-drying zone on the moving belt to 40° to 90°C, preferably at 60° to 90°C, and the outlet temperature of 40° to 80°C, and regulating the inlet temperatures of the cooling zone at a temperature of 10° to 40°C, preferably at 10° to 25°C, and the outlet temperature of 20° to 80°C, preferably 20° to 60°C,
5) collecting the microalgal flour granules thus obtained.

The present invention further relates to the use of the granules of the present invention or obtained according to the process of the present invention, in a food product.

Preferably, the product is selected from the group consisting of soup, sauce, condiment, ice-cream, dehydrated eggs, dough, bread, cake, cookie, or dry baked-good mix.

### Detailed Description

For the purpose of the invention, the term "microalgal flour" means a substance comprised of a plurality of particles of microalgal biomass. The microalgal biomass is derived from algal cells, which may be either whole, disrupted, or a combination of whole and disrupted cells. The microalgal cells may be grown in the dark (e.g., *Chlorella* grown in the dark on a fixed carbon source). Then, by "microalgal flour" is not intended to refer to a mixture prepared with basic components such as proteins, lipids and polysaccharides. It refers to a microalgal biomass with its complex composition. In a preferred embodiment, the microalgal flour granules contains at least 80 % in weight, more preferably at least 90, 95 or 99 % in weigh of microalgal biomass.

The term "oversize" means the particles in a particle distribution that are greater in size than a given threshold, either numerically or physically, as in the mass fraction or other measure of particles retained by a filter of a given porosity.

Embodiments of the present invention relate to microalgal biomass suitable for human consumption which is rich in lipids. By "lipid-rich" is intended to refer to at least at least 25 to 35% or more by dry weight of lipid.

In a preferred embodiment, the biomass contains at least 25%, at least 50%, or at least 75% by dry cell weight of lipid.

In a preferred embodiment, the microalgae are of the *Chlorella* genus. For instance, the *Chlorella* genus comprises *Chlorella protothecoides, Chlorella kessleri, Chlorella minutissima, Chlorella sp., Chlorella sorokiniama, Chlorella luteoviridis, Chlorella vulgaris, Chlorella reisiglii, Chlorella ellipsoidea, Chlorella saccarophila, Parachlorella kessleri, Parachlorella beijerinkii, Prototheca stagnora and Prototheca moriformis. Chlorella protothecoides* is one such species of microalgae that is suitable and preferred for use in preparing a microalgal flour.

Embodiments of the present invention relate to microalgal flour granules which have specific particle size distribution, flow capability and wettability properties.

Embodiments of the present invention also relate to microalgal flour granules which have particular aerated bulk density and specific surface area parameters.

Embodiments of the present invention relate to the process for preparing these microalgal flour granules.

In the microalgal flour, the microalgal cell wall or cell debris can optionally encapsulate the oil, at least until the food product containing it is cooked, thereby increasing the shelf life of the oil.

The microalgal flour may also provide other benefits, such as micronutrients, dietary fibres (soluble and insoluble carbohydrates), phospholipids, glycoproteins, phytosterols, tocopherols, tocotrienols, and selenium.

The microalgae may be modified to have reduced amounts of pigments. For example, Chlorella *protothecoides* may be modified so as to be reduced in or devoid of pigments. The modification may be accomplished by Ultraviolet (UV) and/or chemical mutagenesis.

For example, *Chlorella protothecoides* was exposed to a cycle of chemical mutagenesis with N-methyl-N'-nitro-N-Nitrosoguanidine (NTG) and the colonies were screened for the colour mutants. The colonies exhibiting no colour were then subjected to a cycle of UV irradiation.

A pigment-reduced strain of *Chlorella protothecoides* was isolated and corresponds to *Chlorella protothecoides* 33-55, deposited on 13 October 2009 with the American Type Culture Collection (10801 University Boulevard, Manassas, Virginia 20110-2209) in accordance with the Treaty of Budapest.

In another embodiment, a strain of *Chlorella protothecoides* with a reduced pigmentation was isolated and corresponds to *Chlorella protothecoides* 25-32, deposited on 13 October 2009 at the American Type Culture Collection.

According to an embodiment of the invention, the microalgae are cultivated in a medium containing a fixed carbon source and a nitrogen source in the absence of light (heterotrophic conditions).

The solid and liquid growth media are generally available in the literature, and the recommendations for preparing the particular media which are suitable for a large variety of microorganism strains can be found, for example, online at http://www.utex.org/, a site maintained by the University of Texas at Austin for its culture collection of algae (UTEX).

The production of biomass may be carried out in bioreactors. The specific examples of bioreactors, the culture conditions, and the heterotrophic growth and the propagation method can be combined in any appropriate manner in order to improve the efficiency of the microbial growth and lipids and/or proteins production. Preferably, the culturing of the microalgae is performed in the dark in the presence of a fixed carbon source (e.g., sugar and/or glycerol).

In order to prepare the biomass for use such as the composition of foods, the biomass obtained at the end of fermentation is harvested from the fermentation medium. At the time that the microalgal biomass is harvested from the fermentation medium, the biomass comprises intact cells mostly in suspension in an aqueous culture medium.

In order to concentrate the biomass, a step of solid-liquid separation, by filtration or by centrifugation, may then be carried out.

After concentration, the microalgal biomass can be processed in order to produce vacuum-packed cakes, algal flakes, algal homogenates, algal powder, algal flour, or algal oils.

The microalgal biomass may also be dried in order to facilitate the subsequent processing or for use of the biomass in its various applications, in particular food applications.

The final food products have various textures and flavours depending on whether the algal biomass is dried, and if it is, according to the drying method used (See, for example, US 6,607,900, US 6,372,460, and US 6,255,505).

In a spray-drier, a liquid suspension is then sprayed in the form of a dispersion of fine droplets in a heated air stream. The material entrained is rapidly dried and forms a dry powder.

This microalgal flour may be prepared from concentrated microalgal biomass which has been mechanically lysed and homogenised, the homogenate then being spray-dried or flash-dried.

In an embodiment, the cells may be lysed. The cell wall and the intracellular components may be milled or otherwise reduced, e.g., using a homogenizer, to particles (non-agglomerated lysed cells). In specific embodiments, the resulting particles may have an average size of less than 500 µm, 100 µm, or even 10 µm or less.

In an embodiment of the present invention, the lysed cells thus obtained are dried.

For example, a pressure disrupter can be used to pump a suspension containing the cells through a restricted orifice in order to lyse the cells. A high pressure (up to 1500 bar) is applied, followed by an instantaneous expansion through a nozzle.

The disruption of the cells may occur via three different mechanisms: encroachment on the valve, high shear of the liquid in the orifice, and sudden drop in pressure on outlet, causing the cell to explode.

The method releases intracellular molecules.

A NIRO homogeniser (GEA NIRO SOAVI) (or any other high-pressure homogeniser) can be used to disrupt the cells.

This high-pressure treatment (e.g., up to approximately 1500 bar) of the algal biomass may lyse more than 90% of the cells and may reduce the particle size (e.g., to less than about 5 microns). In one embodiment, the pressure is from about 900 bar to 1,200 bar. Preferably, the pressure is about 1,100 bar.

In another embodiment, to increase the percentage of lysed cells, the algal biomass is subjected to high-pressure treatment two times or more. In an embodiment, double homogenization is used to increase the cell lysis to above 50%, above 75% or above 90%. Lysis of approximately 95% has been observed using this technique.

Alternatively, a bead mill is used. In a bead mill, the cells are agitated in suspension with small abrasive particles. The disruption of the cells is caused by shear forces, the milling between the beads, and the collisions with beads. These beads disrupt the cells so as to release the cellular content therefrom. A description of a suitable bead mill is given, for example, in US patent 5,330,913.

A suspension of particles, optionally of smaller size than the cells of origin, in the form of an "oil-in-water" emulsion, may be obtained. This emulsion may then be spray-dried, leaving a dry powder containing the cell debris and oil. After drying, the water content or the moisture content of the powder may be less than 10%, preferably less than 5%, more preferably less than 3%.

Embodiments of the present invention solve the aforementioned problems associated with prior art microalgal flour, by providing granules which have particular properties, such as favourable flavour, particle size distribution, flow, wettability, aerated bulk density and specific surface area.

Specific microalgal flour granules in accordance with embodiments of the invention are characterized in that they have the following properties:
- monomodal particle size distribution, e.g., as measured on a COULTER® LS laser particle size analyser, of 2 to 400 µm, centred on a particle mode diameter (D mode) between 5 and 15 µm, preferably a monomodal particle size distribution of 2 to 200 µm centred on a particle mode diameter (D mode) between 5 and 15 µm, more preferably a monomodal particle size distribution of 2 to 100 µm centred on a particle mode diameter (D mode) between 5 and 15 µm,
- flow grades, determined according to a test A, of 0.5 to 60% by weight for the oversize at 2000 µm, of 0.5 to 60% by weight for the oversize at 1400 µm and of 0.5 to 95% by weight for the oversize at 800 µm; preferably of 0.5 to 40% by weight for the oversize at 2000 µm, of 20 to 60% by weight for the oversize at 1400 µm and of 10 to 95% by weight for the oversize at 800 µm; more preferably of 0.5 to 20% by weight for the oversize at 2000 µm, of 40 to 60% by weight for the oversize at 1400 µm and of 10 to 40 % by weight for the oversize at 800 µm;

- degree of wettability, expressed according to a test B, by the height of the product settled in a beaker (600 mL squat form 125 mm tall beaker, e.g., Fisher Scientific product code FB33114), at a value of 0 to 4.0 cm, preferably 0 to 2.0 cm, more preferably 0 to 0.5 cm.

The microalgal flour granules according to the invention may be characterized by their particle size distribution and notably by their particle mode diameter (D mode). This measurement may be carried out on a COULTER® LS laser particle size analyser, equipped with its small volume dispersion module or SVM (125 ml), according to the specifications provided my the manufacturer (e.g., in the *"Small Volume Module Operating instructions"*)*.*

The microalgal flour particles are agglomerated during processing.

Despite the agglomeration, the microalgal flour granules according to the invention also have quite satisfactory flow capability, according to a test A. The resulting flow properties provide various advantages in the production of food from the microalgal flour. For example, more accurate measurements of flour quantities may be made during food product manufacturing, and dispensing of flour aliquots may be more readily automated.

The test A consists of measuring the degree of cohesion of the microalgal flour granules according to the invention. First the microalgal flour granules according to the invention are sieved with a mesh size of 800 µm. The flour granules which have a size of less than 800 µm are then recovered and introduced into a closed container, and undergo mixing by epicycloidal movement, e.g., using a TURBULA type T2C laboratory mixer. By virtue of this mixing, the microalgal flour granules in accordance with the invention will, according to their own characteristics, express their propensities to agglomerate or to push away one another.

The granules thus mixed are then deposited on a column of 3 sieves (2000 µm; 1400 µm; 800 µm) for a further sieving.

Once the sieving has ended, the oversize on each sieve is quantified and the result gives an illustration of the "cohesive" or "sticky" nature of the microalgal flour granules.

Thus, a free flowing, and therefore weakly cohesive, powder of granules will flow through sieves of large mesh size, but will be increasingly stopped as the meshes of said sieves become tighter.

A protocol for measuring particle size according to the Test A follows:
- sieve enough product on an 800 µm sieve so as to recover 50 g of product of size less than 800 µm,
- introduce these 50 g of flour granules of size less than 800 µm into a glass jar with a capacity of 1 litre (ref: BVBL Verrerie Villeurbannaise-Villeurbanne France) and close the lid,
- place this jar in the TURBULA model T2C mixer set to the speed of 42 rpm (Willy A. Bachofen Sarl-Sausheim-France) and mix for 5 minutes,
- prepare a column of 3 sieves (sold by SAULAS - diameter 200 mm; Paisy Cosdon - France) which will be placed on a Fritsch sieve shaker, model Pulverisette type 00.502; details of the assembly starting from the bottom to the top: sieve shaker, sieve base, 800 µm sieve, 1400 µm sieve, 2000 µm sieve, sieve shaker lid,
- deposit the powder resulting from the mixing on the top of the column (2000 µm sieve), close with the sieve shaker lid and sieve for 5 minutes on the FRITSCH sieve shaker, with an amplitude of 5 in the continuous position,
- weigh the oversize on each sieve.

The microalgal flour granules according to an embodiment of the invention then exhibit:
- 0.5 to 60% by weight for the oversize at 2000 µm,
- 0.5 to 60% by weight for the oversize at 1400 µm, and
- 0.5 to 95% by weight for the oversize at 800 µm.

More preferably, the microalgal flour granules according to an embodiment of the invention exhibit flow grades:
- 0.5 to 40 % by weight for the oversize at 2000 µm,
- 20 to 60 % by weight for the oversize at 1400 µm, and
- 10 to 95% by weight for the oversize at 800 µm.

Still more preferably, the microalgal flour granules according to an embodiment of the invention exhibit flow grades:
- 0.5 to 20 % by weight for the oversize at 2000 µm,
- 40 to 60 % by weight for the oversize at 1400 µm, and
- 10 to 40 % by weight for the oversize at 800 µm.

By way of comparison, as it will be shown hereinafter, the microalgal flour powders prepared by conventional drying techniques (single-effect spray-drying such as a tall form dryer or a box dryer) exhibit a sticky aspect, of low fluidity, which is reflected by a behaviour according to the test A:
- 50 to 90% by weight of oversize on 2000 µm,
- 0.5 to 30% by weight of oversize on 1400 µm,
- 5 to 40% by weight of oversize on 800 µm.

In other words, a majority of such microalgal flour powder (more than 50% of the powder) does not manage to cross the 2000 µm threshold, although initially sieved on 800 µm.

These results demonstrate that the conventional drying techniques result rather in the production of very cohesive powders, since, after mixing, using little mechanical energy, particles of less than 800 µm do not manage to pass through a sieve of 2000 µm, which nevertheless has a mesh size that is 2.5 times larger.

It is easily deduced therefrom that a conventional powder, exhibiting such a behaviour, is not easy to process in a preparation where a homogeneous distribution of the ingredients is recommended.

Conversely, microalgal flour compositions according to embodiments of the present invention are much easier to process because they are less sticky. The low level of stickiness is evident from several measures including small granule size, high wettability, and improved flowability.

Microalgal flour granules according to embodiments of the invention exhibit only a small oversize (< 50%) on 2000 µm for the family of granules of fine particle size, and very low or virtually no (e.g., <5%) oversize for the family of granules of large particle size. It is believed that the microalgal flour particles produced according to methods disclosed herein are less cohesive than granules prepared by prior methods.

Nonetheless, within the flour of certain embodiments of the present invention, particles of smaller size are believed to be more cohesive than particles of larger size. Thus, there is a greater oversize for the fine particles.

The microalgal flour granules according to the invention are characterized by notable properties of wettability, according to a test B.

Wettability is a technological property that is very often used to characterize a powder resuspended in water, for example in the dairy industries.

Wettability may be measured by the ability of a powder to become immersed after having been deposited at the surface of water (Haugaard Sorensen et al., « Methodes d'analyse des produits laitiers deshydrates », Niro A/S (ed.), Copenhagen, Denmark, 1978), reflecting the capacity of the powder to absorb water at its surface (Cayot et Lorient, « Structures et technofonctions des protéines du lait ». Paris : Airlait Recherches: Tec et Doc, Lavoisier, 1998).

The measurement of this index conventionally consists of measuring the time necessary for a certain amount of powder to penetrate into the water through its free surface at rest. According to Haugaard Sorensen et al. (1978), a powder is said to be "wettable" if the time to penetrate is less than 20 seconds.

It is also necessary to associate with the wettability the ability of the powder to swell. Indeed, when a powder absorbs water, it gradually swells. Then, the structure of the powder disappears when the various constituents are solubilised or dispersed.

Among the factors that influence wettability are the presence of large primary particles, the presence of the fines, the density of the powder, the porosity and the capillarity of the powder particles and also the presence of air, the presence of fats at the surface of the powder particles and the reconstitution conditions.

Test B more particularly reports on the behaviour of the microalgal flour powder brought into contact with water, by measuring, after a certain contact time, the height of the powder which decants when placed at the surface of the water.

The protocol for the Test B is the following:
- introduce 500 ml of demineralised (deionized) water at 20°C into a 600 ml squat-form beaker (FISHERBRAND FB 33114),
- place 25 g of the microalgal flour powder uniformly at the surface of the water, without mixing,
- observe the behaviour of the powder after 3 h of contact,
- measure the height of the product that has penetrated the surface of the water and settled at the bottom of the beaker.

A low-wettability powder will remain at the surface of the liquid, whereas for a powder of better wettability, more material will settle at the bottom of the beaker.

The microalgal flour granules according to the invention then have a degree of wettability, expressed according to this test B, by the height of the product settled in a beaker, at a value of 0 to 4.0 cm, preferably 0 to 2.0 cm, more preferably 0 to 0.5 cm.

By way of comparison, the flour of microalgae dried conventionally by single-effect spray-drying stays at the surface of the water to a greater extent than the flour described above, and does not become sufficiently hydrated to be able to decant to the bottom of the beaker.

Microalgal flour granules according to embodiments of the present invention are also characterized by:
- their aerated bulk density, and
- their specific surface area.

The aerated bulk density is determined using a conventional method of measuring aerated bulk density, i.e. by measuring the mass of an empty container (g) of known volume, and by measuring the mass of the same container filled with the product to be tested.

The difference between the mass of the filled container and the mass of the empty container, divided by the volume (ml) then gives the value of the aerated bulk density.

For this test, the 100 ml container, the scoop used for filing and the scraper used are supplied with the apparatus sold by the company HOSOKAWA under the trademark POWDER TESTER type PTE.

To perform the measurement, the product is screened through a sieve with apertures of 2000 µm (sold by SAULAS). The density is measured on the product that is not retained on that screen.

Under these conditions, the microalgal flour granules according to embodiments of the invention have an aerated bulk density of 0.30 to 0.50 g/ml, preferably of 0.35 to 0.45 g/ml, and in particular of 0.35 to 0.42 g/ml.

This aerated bulk density value is all the more notable since the microalgal flour granules in accordance with embodiments of the invention have a higher density than the flour of conventionally dried microalgae. It is believed that the density of a product will be lower if it is prepared by conventional spray-drying, e.g., less than 0.30 g/ml.

Microalgal flour granules in accordance with embodiments of the invention can also be characterized by their specific surface area.

The specific surface area is determined over the whole of the particle size distribution of the microalgal flour granules, e.g., by means of a Quantachrome specific surface area analyser based on a test for absorption of nitrogen onto the surface of the product subjected to the analysis, carried out on a SA3100 apparatus from Beckmann Coulter, according to the technique described in the article BET Surface Area by Nitrogen Absorption by S. BRUNAUER et al. (Journal of American Chemical Society, 60, 309, 1938).

Microalgal flour granules in accordance with an embodiment of the invention, were found to have a specific surface area of 0.10 to 0.70 m²/g after degassing for 30 minutes at 30°C under vacuum, preferably of 0.3 to 0.6 m²/g, and in particular 0.4 to 0.6 m²/g.

By way of comparison, the flour of microalgae dried by conventional spray-drying was found to have a specific surface area according to BET of 0.65 m²/g.

It is surprising to note that the larger the size of the microalgal flour granules, the smaller their specific surface area is, since large granules tend to be comprised of agglomerated smaller particles.

The microalgal flour granules in accordance with one or more of the above-described embodiments of the invention are capable of being obtained by a particular spray-drying process, which uses high-pressure spray nozzles in a concurrent-flow tower which directs the articles towards a moving belt at the bottom of the tower.

The material is then transported as a porous layer through post-drying and cooling zones, which give it a crunchy structure, like that of a cake, which breaks at the end of the belt. The material is then processed to a desired average particle size.

In order to carry out the granulation of the algal flour, by following this spray-drying principle, a FILTERMAT™ spray-drier sold by the company GEA NIRO or a TETRA MAGNA PROLAC DRYER™ drying system sold by the company TETRA PAK can, for example, be used.

Surprisingly and unexpectedly, the granulation of the microalgal flour by implementing, for example, this Filtermat™ process makes it possible not only to prepare, with a high yield, a product in accordance with the invention in terms of the particle size distribution and of its flowability, but also to confer on it unexpected properties of wettability without necessarily needing granulation binders or anti-caking agents (although these may be optionally included).

In accordance with an embodiment of the invention, the process for preparing the microalgal flour granules in accordance with the invention therefore comprises the following steps:
1) preparing a microalgal flour emulsion in water at a dry matter content of 15 to 40% by weight,
2) introducing this emulsion into a high-pressure homogeniser,
3) spraying it in a vertical spray-drier equipped with a moving belt at its base, and with a high-pressure nozzle in its upper part, while at the same time regulating:
   a) the pressure applied at the spray nozzles at values of more than 100 bar, preferably at 100 to 200 bar, more preferably at 160 to 170 bar,
   b) the inlet temperature of 150° to 250°C, preferably 180° to 200°C, and
   c) the outlet temperature in this spray-drying zone is 60° to 120°C, preferably at 60° to 110°C, more preferably 60° to 80°C
4) regulating the inlet temperatures of the post-drying zone on the moving belt to 40° to 90°C, preferably at 60° to 90°C, and the outlet temperature of 40° to 80°C, and regulating the inlet temperatures of the cooling zone at a temperature of 10° to 40°C, preferably at 10° to 25°C, and the outlet temperature of 20° to 80°C, preferably 20° to 60°C,
5) collecting the microalgal flour granules thus obtained.

The first step of the process of the invention consists in preparing a suspension of lipid-rich microalgal flour (e.g., 30-70%, or 40-60% lipid by dry cell weight), in water at a dry matter content of 15 to 40% by dry weight. The microalgal flour is essentially made of microalgal biomass.

At the end of fermentation, the biomass can be at a concentration 130 to 250 g/l, with a lipid content of approximately 50% of dry weight, a fibre content of 10 to 50% of dry weight, a protein content of 2 to 15% of dry weight, and a sugar content of less than 10% of dry weight.

As will be exemplified hereinafter, the biomass extracted from the fermentation medium by any means known to those skilled in the art is subsequently:
- concentrated (e.g. by centrifugation),
- optionally preserved with the addition of standard preservatives (e.g., sodium benzoate and potassium sorbate).
- the cells disrupted.

The emulsion may then be homogenised. This may be accomplished with a two-stage device, for example a GAULIN homogeniser sold by the company APV, with a pressure of 100 to 250 bar at the first stage, and 10 to 60 bar at the second stage.

The homogenized flour suspension is then sprayed in a vertical spray-drier equipped with a moving belt at its base, and with a high-pressure nozzle in its upper part.

The pressure applied at the spray nozzles at values of more than 100 bar, preferably at 100 to 200 bar, more preferably at 160 to 170 bar, the inlet temperature of 150° to 250°C, preferably 180° to 200°C, and the outlet temperature in this spray-drying zone is 60° to 120°C, preferably at 60° to 110°C, more preferably 60° to 80°C

The belt moves the algal material into a drying zone and then a cooling zone. The inlet temperatures of the drying zone on the moving belt to 40° to 90°C, preferably at 60° to 90°C, and the outlet temperature of 40° to 80°C, and regulating the inlet temperatures of the cooling zone at a temperature of 10° to 40°C, preferably at 10° to 25°C, and the outlet temperature of 20° to 80°C, preferably 20° to 60°C.

The pressure applied, and the inlet temperature of the post-drying zone are believed to be important parameters in determining the texture of the cake on the belt and then the resulting particle size distribution.

The microalgal flour granules according to the conditions of the preceding step of the process in accordance with the invention fall onto the moving belt with a residual moisture content of 2 to 4%.

Use of the above mentioned temperature ranges may bring the degree of moisture of the microalgal flour granules to a desired value of less than 4%, and more preferably less than 2%.

Optionally, an antioxidant (e.g., BHA, BHT, or others known in the art) can be added prior to drying to preserve freshness.

The final step of the process according to the invention consists, finally, in collecting the microalgal flour granules thus obtained.

The present invention relates to the microalgal four granules as defined in the present invention or as obtained by the process disclosed in the present invention.

The microalgal flour granules according to the invention contain at least 25 to 35% or more by dry weight of lipid. In particular, it may contain at least 25%, or at least 55% of lipid by dry weight.

As detailed above, the granules may contain a mixture of intact cells and disrupted cells, or mainly disrupted cells. In a preferred embodiment, the percentage of intact cells in the granules of the invention is 25% to 75%. Alternatively, the percentage of cell lysis can be at least 50%, preferably at least 75% or 90%, more preferably at least or approximately 95%.

Flour granules produced according to the embodiments described herein may be incorporated into a food product such as a soup, sauce, condiment, ice-cream, dehydrated eggs, dough, bread, cake, cookie, or dry baked-good mix. For instance, the product is selected from the group consisting of soup, sauce, condiment, ice-cream, dehydrated eggs, dough, bread, cake, cookie, or dry baked-good mix.

Other characteristic features and advantages of the invention will be apparent on reading the following Examples. However, they are given here only as an illustration and are not limiting.

### EXAMPLES

### Example 1. Production of the microalgal flour

In an illustrative fermentation, a low-pigment mutant strain of *Chlorella protothecoides* (obtained through chemical and UV mutagenesis) was cultured and the resulting algal biomass was at a cell concentration of 150 g/l. Methods for producing and culturing low pigmentation *Chlorella protothecoides* are disclosed in U.S. Patent Application Pub. No. 2010-0297292, published November 25, 2010.

The washed biomass was milled using a bead mill with a lysis rate of 95%.

The biomass thus generated was pasteurised and homogenised under pressure in a GAUVIN two-stage homogeniser (250 bar at the first stage / 50 bar at the second) after adjustment of the pH to 7 with potassium hydroxide.

### Example 2. Drying of the homogenised "oil-in-water" emulsion of microalgal flour

The biomass obtained in Example 1 were dried:
- in a FILTERMAT device, so as to obtain the microalgal flour,
- in a single-effect spray-drier (liquid dried by means of a single pass through the heat flow and then recovered at the bottom of the tower at the level of the cyclone or of the sleeve filter), sold by GEA NIRO, so as to obtain a control microalgal flour, in accordance with what is commercially accessible.

The single-effect spray-drying operating conditions were the following:
- inlet temperature of 180°C
- outlet temperature: 85°C.

The product obtained with the single-effect spray-drying had a fine particle size distribution, centered on 40 µm.

As regards a spray-drying process in accordance with embodiments of the invention, it consisted of spraying the homogenised suspension at high pressure in a FILTERMAT device sold by the company GEA/NIRO, equipped with a DELAVAN high-pressure injection nozzle, under the following conditions:
- the pressure was regulated at 160 to 170 bar,
- spray-drying inlet temperature: 180° to 200°C
- outlet temperature: 60° - 80°C
- post-drying zone inlet temperature: 60° to 90°C
- outlet temperature: 65°C
- cooling zone inlet temperature: 10 to 20°C

The powder then arrived on the belt with a residual moisture content of 2 to 4%.

On leaving the belt: the microalgal flour granules had a residual moisture content of from 1 to 3%, about 2%.

### Example 3. Characterization of the 3 lots of microalgal flour granules in accordance with embodiments of the invention

The following tables give the values of the parameters of:
- particle size,
- flowability,
- wettability,
- aerated bulk density,
- specific surface area,
of three lots ("A", "B" and "C") of the microalgal flour granules in accordance with the invention, compared with these same parameters of a flour of microalgae dried by simple spray-drying in accordance with the conditions described in example 2.

**Table I. Particle size (COULTER LS laser particle size analyser**

| | Particle size distribution |
|---|---|
| Control of flour dried by single-effect spray-drying | Monomodal, 2 to 100 µm, centred on 40 µm |
| "A" | Monomodal, 1 to 80 µm centred on 9,1 µm |
| "B" | Monomodal, 1 to 100 µm centred on 8 µm |
| "C" | Monomodal, 1 to 100 µm centred on 12,6 µm |

Granulation on the FILTERMAT device made it possible to obtain populations of granules of fine particle size distribution, centred on a particle mode diameter (D mode) between 5 and 15 µm.

**Table II. Flowability (Cohesion test A)**

| | Oversize at 2000 µm (% by weight) | Oversize at 1400 µm (% by weight) | Oversize at 800 µm (% by weight) |
|---|---|---|---|
| Control of flour dried by single-effect spray-drying | 71 | 18 | 8 |
| "A" | 18,4 | 46,4 | 12 |
| "B" | 6 | 53 | 36 |
| "C" | 9 | 60 | 17 |

More than 70% of microalgal flour dried by single-effect spray-drying did not manage to flow through the 2000 µm filter (although initially sieved on 800 µm), conveying the "tacky" nature of the particles making up said flour, whereas approximately 80 to 90 % of microalgal flour granules in accordance with the invention managed to do so.

**Table III. Wettability (test B)**

| | Height of powder settled after 3 hours (cm) |
|---|---|
| Control of flour dried by single-effect spray-drying | Does not decant |
| "A" | 0.2 (> 75% of the powder is hydrated) |
| "B" | 0 (> 80% of the powder is hydrated) |
| "C" | 0 (> 80% of the powder is hydrated) |

It is noted that the conventional microalgal flour, characterized by "cohesive" particles, does not manage to hydrate sufficiently in order to settle, whereas the microalgal flour granules prepared by the present invention managed to do so without difficulty.

**Table IV. Density and specific surface area**

| | Aerated bulk density (g/ml) | Specific surface area (m²/g) |
|---|---|---|
| Control of flour dried by single-effect spray-drying | 0.27 | 0.65 |
| "A" | 0.37 | 0.4 |
| "B" | 0.4 | 0.5 |
| "C" | 0.39 | 0.6 |

As indicated previously, it is noted that, surprisingly, the microalgal flour granules prepared by embodiments of the present invention had a higher aerated bulk density than that of the microalgal flour dried by more conventional means.

It should also be noted that, by virtue of their particle size distribution, the microalgal flour granules have, compared with the microalgal flour, a smaller specific surface area.

## Claims

1. Microalgal flour granules, **characterized in that** they have at least the three following characteristics:
- a monomodal particle size distribution, measured on a particle size analyser, of from 2 to 400 µm, centred on a particle mode diameter (D mode) between 5 and 15 µm,
- flow grades, determined according to a test A,
∘ 0.5 to 60% by weight for the oversize at 2000 µm,
∘ 0.5 to 60% by weight for the oversize at 1400 µm,
∘ 0.5 to 95% by weight for the oversize at 800 µm,
- a degree of wettability, expressed according to a test B, by the height of the product settled in a beaker, at a value of 0 to 4.0 cm, preferably 0 to 2.0 cm, more preferably 0 to 0.5 cm,
and **in that** the percentage of lipid in the granules is at least 25% by dry weight and the percentage of lysed cells in the granules is 25% to 95%.

2. Granules according to Claim 1, **characterized in that** they have an aerated bulk density of 0.30 to 0.50 g/ml.

3. Granules according to any one of Claims 1 and 2, **characterized in that** they have a specific surface area according to the BET method of 0.10 to 0.70 m²/g.

4. A process for preparing the granules according to any one of Claims 1 to 3, **characterized in that** it comprises the following steps:
1) preparing a microalgal flour emulsion in water at a dry matter content of 15 to 40% by dry weight,
2) introducing this emulsion into a high-pressure homogeniser,
3) spraying it in a vertical spray-drier equipped with a moving belt at its base, and with a high-pressure nozzle in its upper part, while at the same time regulating:
a) the pressure applied at the spray nozzles at values of more than 100 bar, preferably at 100 to 200 bar, more preferably at 160 to 170 bar,
b) the inlet temperature of 150° to 250°C, preferably 180° to 200°C, and
c) the outlet temperature in this spray-drying zone is 60° to 120°C, preferably at 60° to 110°C, more preferably 60° to 80°C,
4) regulating the inlet temperatures of the post-drying zone on the moving belt to 40° to 90°C, preferably at 60° to 90°C, and the outlet temperature of 40° to 80°C, and regulating the inlet temperatures of the cooling zone at a temperature of 10° to 40°C, preferably at 10° to 25°C, and the outlet temperature of 20° to 80°C, preferably 20° to 60°C,
5) collecting the microalgal flour granules thus obtained.

5. Use of the granules of any one of Claims 1 to 3 or obtained according to the process of Claim 4, in a food product.

## Patentansprüche

1. Mikroalgenmehlgranulat, **dadurch gekennzeichnet, dass** es mindestens die drei folgenden Eigenschaften aufweist:
- eine monomodale Teilchengrößenverteilung, gemessen von einem Teilchengrößenanalysator, von 2 bis 400 µm, zentriert auf einen Teilchenmodusdurchmesser (D-Modus) zwischen 5 und 15 µm,
- Fließgrade, bestimmt nach einem Test A,
∘ 0,5 bis 60 Gewichts% für die Übergröße von 2000 µm,
∘ 0,5 bis 60 Gewichts% für die Übergröße von 1400 µm,
∘ 0,5 bis 95 Gewichts% für die Übergröße von 800 µm,
- einen Grad der Benetzbarkeit, ausgedrückt gemäß einem Test B, durch die Höhe des in einem Becherglas abgelagerten Produktes bei einem Wert von 0 bis 4,0 cm, vorzugsweise 0 bis 2,0 cm, bevorzugter 0 bis 0,5 cm,
und dadurch, dass der prozentuale Anteil an Lipid im Granulat mindestens 25 Trockengewichtsprozent und der Prozentsatz an lysierten Zellen im Granulat 25% bis 95% beträgt.

2. Granulat nach Anspruch 1, **dadurch gekennzeichnet, dass** es eine belüftete Schüttdichte von 0,30 bis 0,50 g/ml aufweist.

3. Granulat nach einem der Ansprüche 1 und 2, **dadurch gekennzeichnet, dass** es eine spezifische Oberfläche von 0,10 bis 0,70 m²/g nach der BET-Methode aufweist.

4. Ein Verfahren zur Herstellung des Granulats nach einem der Ansprüche 1 bis 3, **dadurch gekennzeichnet, dass** es die folgenden Schritte umfasst:
1) Herstellen einer Mikroalgenmehl-Emulsion in Wasser mit einem Trockensubstanzgehalt von 15 bis 40 Gewichts%,
2) Einbringen dieser Emulsion in einen Hochdruckhomogenisator,
3) Einsprühen dieser in einen vertikalen Sprühtrockner, der an seiner Basis mit einem sich bewegenden Band ausgestattet ist, und mit einer Hochdruckdüse in seinem oberen Teil, wobei gleichzeitig reguliert wird:
a) der Druck, der an den Sprühdüsen bei Werten von mehr als 100 bar, vorzugsweise bei 100 bis 200 bar, bevorzugter bei 160 bis 170 bar, angelegt wird,
b) die Einlasstemperatur von 150° bis 250°C, vorzugsweise 180° bis 200°C und
c) die Auslasstemperatur in dieser Sprühtrocknungszone beträgt 60° bis 120°C, vorzugsweise 60° bis 110°C, bevorzugter 60° bis 80°C,
4) Regulieren der Eintrittstemperaturen der Nachtrocknungszone auf dem laufenden Band auf 40° bis 90°C, vorzugsweise auf 60° bis 90°C, und die Auslasstemperatur auf 40° bis 80°C, und *Regulieren* die Eintrittstemperaturen der Kühlzone bei einer Temperatur von 10° bis 40°C, vorzugsweise bei 10° bis 25°C, und die Austrittstemperatur von 20° bis 80°C, vorzugsweise 20° bis 60°C,
5) Sammeln der so erhaltenen Mikroalgenmehlgranulate.

5. Verwendung des Granulats nach einem der Ansprüche 1 bis 3 oder erhalten nach dem Verfahren nach Anspruch 4 in einem Nahrungsmittelprodukt.

## Revendications

1. Granules de farine de microalgues, **caractérisés en ce qu'**ils ont au moins les trois caractéristiques suivantes :
- une distribution de granulométrie monomodale, mesurée sur un analyseur de granulométrie, de 2 à 400 µm, centrée sur un diamètre modal de particule (D mode) entre 5 et 15 µm,
- des degrés d'écoulement, déterminés conformément à un test A,
o de 0,5 à 60 % en poids pour le déclassé supérieur à 2000 µm,
∘ 0,5 à 60 % en poids pour le déclassé supérieur à 1400 µm,
o de 0,5 à 95 % en poids pour le déclassé supérieur à 800 µm,
- un degré de mouillabilité, exprimé conformément à un test B, par la hauteur du produit sédimenté dans un bêcher, ayant une valeur de 0 à 4,0 cm, de préférence de 0 à 2,0 cm, mieux encore de 0 à 0,5 cm,
et **en ce que** le pourcentage de lipides dans les granules est d'au moins 25 % en poids sec et le pourcentage de cellules lysées dans les granules est de 25 % à 95 %.

2. Granules selon la revendication 1, **caractérisés en ce qu'**ils ont une masse volumique apparente à l'état aéré de 0,30 à 0,50 g/ml.

3. Granules selon l'une quelconque des revendications 1 et 2, **caractérisés en ce qu'**ils ont une surface spécifique, conformément à la méthode BET, de 0,10 à 0,70 m²/g.

4. Procédé pour préparer les granules selon l'une quelconque des revendications 1 à 3, **caractérisé en ce qu'**il comprend les étapes suivantes :
1) préparation d'une émulsion aqueuse de farine de microalgues à une teneur en matières sèches de 15 à 40 % en poids sec,
2) introduction de cette émulsion dans un homogénéisateur haute pression,
3) pulvérisation de celle-ci dans un atomiseur vertical équipé d'une courroie mobile au niveau de sa base, et d'une buse haute pression au niveau de sa partie supérieure, cependant que sont en même temps régulées :
a) la pression appliquée au niveau des buses de pulvérisation à des valeurs supérieures à 100 bar, de préférence de 100 à 200 bar, mieux encore de 160 à 170 bar,
b) la température d'entrée à 150° à 250 °C, de préférence 180° à 200 °C, et
c) la température de sortie dans cette zone d'atomisation à 60° à 120 °C, de préférence 60° à 110 °C, mieux encore 60° à 80 °C,
4) la régulation des températures d'entrée de la zone post-séchage sur la courroie mobile à 40° à 90 °C, de préférence 60° à 90 °C, et de la température de sortie à 40° à 80 °C, et la régulation des températures d'entrée de la zone de refroidissement à une température de 10° à 40 °C, de préférence de 10° à 25 °C, et de la température de sortie à 20° à 80 °C, de préférence 20° à 60 °C,
5) la collecte des granules de farine de micro-algues ainsi obtenus.

5. Utilisation des granules selon l'une quelconque des revendications 1 à 3 ou obtenus selon le procédé de la revendication 4 dans un produit alimentaire.
